# EUROPÄISCHE PATENTSCHRIFT

(11) **EP 2 359 216 B1**
(45) Veröffentlichungstag und Bekanntmachung des Hinweises auf die Patenterteilung: **09.01.2013**
(21) Anmeldenummer: 09771536.1
(22) Anmeldetag: 30.11.2009
(51) Int. Cl.: G06F 1/32

(54) **GERÄTEANORDNUNG UMFASSEND EIN ELEKTRONISCHES GERÄT UND EIN NETZTEIL SOWIE VERFAHREN ZUM SCHALTEN EINES NETZTEILS**
DEVICE ARRANGEMENT COMPRISING AN ELECTRONIC DEVICE AND A POWER ADAPTER AND METHOD FOR CONNECTING A POWER ADAPTER
ENSEMBLE D'APPAREILS COMPRENANT UN APPAREIL ÉLECTRONIQUE ET UN BLOC D'ALIMENTATION, AINSI QUE PROCÉDÉ POUR LA COMMUTATION D'UN BLOC D'ALIMENTATION

(30) Priorität: 03.12.2008 DE 102008060274
(43) Veröffentlichungstag der Anmeldung: 24.08.2011
(73) Patentinhaber: Fujitsu Technology Solutions Intellectual Property GmbH, 80807 München (DE)
(72) Erfinder: SOEMANTRI, Albertus, 86316 Friedberg (DE); BÄSSLER, Erwin, 86343 Königsbrunn (DE)
(74) Vertreter: Epping - Hermann - Fischer
(86) Internationale Anmeldenummer: PCT/EP2009/066070
(87) Internationale Veröffentlichungsnummer: WO 2010/063681

(56) Entgegenhaltungen:
- DE-A1-102004 038 606
- US-A- 5 590 343
- US-A1- 2008 086 553

## Beschreibung

Die Erfindung betrifft eine Geräteanordnung umfassend ein elektronisches Gerät mit einer wiederaufladbaren Batterie und ein mit dem elektronischen Gerät elektrisch koppelbares Netzteil mit einer Wandlerschaltung zum Erzeugen wenigstens einer Betriebsspannung für das elektronische Gerät aus einer Versorgungsspannung eines Stromversorgungsnetzes. Darüber hinaus betrifft die Erfindung ein Verfahren zum Schalten eines Netzteils für ein elektronisches Gerät.

Geräteanordnungen umfassen ein elektronisches Gerät und ein mit dem elektronischen Gerät elektrisch koppelbares Netzteil sind vielfach bekannt. Beispielsweise werden bei so genannten Laptop-Computern mit eingebauten oder einsetzbaren wiederaufladbaren Batterien in der Regel externe Schaltnetzteile verwendet, um das elektronische Gerät mit einer Betriebsspannung zu versorgen, die unter anderem dazu dient, die wiederaufladbare Batterie des elektronischen Gerätes zu laden. Im mobilen Einsatz wird das elektronische Gerät mit Energie aus der wiederaufladbaren Batterie versorgt, so dass auf eine Mitnahme des Netzteils verzichtet werden kann. Eine derartige Geräteanordnung ist zum Beispiel aus der EP 0 996 050 A bekannt.

Nachteilig an derartigen Geräteanordnungen ist unter anderem, dass das Netzteil unabhängig von einem Betriebszustand des elektronischen Gerätes stets eine geringe Verlustleistung verursacht. Ist das elektronische Gerät abgeschaltet oder wird die elektrische Verbindung zwischen dem elektronischen Gerät und dem Netzteil getrennt, verbraucht das Netzteil weiterhin elektrische Energie, die dem elektronischen Gerät nicht zugute kommt.

Aus der US 2002/0023235 A1 ist ein elektrisches Stromversorgungssystem und ein Gerät mit einem Wechselspannungsnetzteil bekannt. Eine Steuerung des Systems stoppt die Versorgung des Geräts von dem Wechselspannungsnetzteil während das System ausgeschaltet und nur geringfügig belastet ist, so dass eine Versorgung aus einer Batterie des Systems erfolgt. In dem bekannten System dient eine zusätzliche Leitung zur Übermittlung eines Steuersignals von der Steuerung an das Wechselspannungsnetzteil.

Der Erfindung liegt die Aufgabe zugrunde, die Energiebilanz der eingangs genannten Geräteanordnungen ohne eine Verwendung zusätzlicher Leitungen zu verbessern. Insbesondere soll eine Geräteanordnung umfassend ein elektronisches Gerät und ein mit dem elektronischen Gerät elektrisch koppelbares Netzteil sowie ein Verfahren zum Schalten eines Netzteils für ein elektronisches Gerät beschrieben werden, die den Verbrauch elektrischer Energie insbesondere in Zeiten einer Nichtnutzung des elektronischen Gerätes verringern. Bevorzugt soll das Netzteil überhaupt keine elektrische Leistung aus einem Stromversorgungsnetz entnehmen, wenn diese durch das elektronische Gerät nicht benötigt wird.

Die oben genannte Aufgabe wird durch eine Geräteanordnung gemäß Patentanspruch 1 gelöst. Dabei weist das elektronische Gerät Überwachungsmittel zum Überwachen wenigstens eines Zustands des elektronischen Geräts und/oder der wiederaufladbaren Batterie, erste Steuermittel zum Erzeugen wenigstens eines Steuersignals in Abhängigkeit des überwachten Zustands und erste Signalisierungsmittel zum Signalisieren des erzeugten Steuersignals an das Netzteil auf. Zusätzlich weist das Netzteil Netztrennmittel zum elektrischen Trennen der Wandlerschaltung von dem Stromversorgungsnetz, zweite Signalisierungsmittel zum Erkennen eines signalisierten Steuersignals der ersten Signalisierungsmittel und zweite Steuermittel zum Ansteuern der Netztrennmittel in Abhängigkeit des erkannten Steuersignals auf.

Durch die Möglichkeit einer Überwachung eines Zustands eines elektronischen Geräts, beispielsweise eines Betriebs- oder Energiesparzustands, und/oder einer wiederaufladbaren Batterie, beispielsweise eines Ladezustands, und einer Signalisierung von dem elektronischen Gerät an das Netzteil sowie durch Vorsehen eines Netztrennmittels zum elektrischen Trennen der Wandlerschaltung von dem Stromversorgungsnetz beim Erhalten eines von dem elektronischen Gerät signalisierten Steuersignals kann das Netzteil vollständig von dem Stromversorgungsnetz getrennt werden, wenn das elektronische Gerät feststellt, dass es keine weitere Energie von dem Netzteil benötigt. Beispielsweise kann das Netzteil von dem Stromversorgungsnetz getrennt werden, wenn das elektronische Gerät sich in einem Bereitschaftszustand befindet und die wiederaufladbare Batterie zumindest teilweise geladen ist.

Anspruchsgemäß ist die Betriebsspannung eine Gleichspannung und das elektronische Gerät und das Netzteil sind über wenigstens eine Stromzuführungsleitung zum Übertragen der Gleichspannung miteinander verbunden, wobei die ersten Signalisierungsmittel zum Aufmodulieren eines dem Steuersignal zugeordneten Wechselspannungssignals auf die Stromzuführungsleitung eingerichtet sind und die zweiten Signalisierungsmittel zum Demodulieren des aufmodulierten Steuersignals eingerichtet sind. Durch Verwendung eines aufmodulierten Wechselspannungssignals auf eine Gleichspannung zum Betrieb des elektronischen Gerätes kann eine Signalisierung von dem elektronischen Gerät zu dem Netzteil ohne Verwendung zusätzlicher Leitungen erfolgen.

Gemäß einer vorteilhaften Ausgestaltung sind die zweiten Steuermittel dazu eingerichtet, die Wandlerschaltung durch das Netztrennmittel beim Erkennen eines Abschaltsignals der ersten Steuermittel von dem Stromversorgungsnetz zu trennen. Gemäß einer weiteren vorteilhaften Ausgestaltung sind die zweiten Steuermittel des Weiteren dazu eingerichtet, die Wandlerschaltung beim Erkennen eines Einschaltsignals mit dem Stromversorgungsnetz zu verbinden. Ein derartiges Steuermittel erlaubt die automatische Trennung bzw. Wiederverbindung des Netzteils mit dem Stromversorgungsnetz, wenn das elektronische Gerät signalisiert, dass ein Aus- bzw. Einschalten des Netzteils in der aktuellen Betriebssituation von Vorteil wäre.

Gemäß einer weiteren vorteilhaften Ausgestaltung ist die Geräteanordnung dadurch gekennzeichnet, dass die zweiten Signalisierungsmittel zusätzlich zur Übertragung von Steuersignalen an die ersten Signalisierungsmittel eingerichtet sind. Wenn die zweiten Signalisierungsmittel zusätzlich zur Übertragung von Steuersignalen von dem Netzteil an das elektronische Gerät eingerichtet sind, ist eine bidirektionale Kommunikation zwischen dem elektronischen Gerät und dem Netzteil möglich, so dass auch komplexe Anforderungen bezüglich der benötigten und/oder durch das Netzteil erzeugbarer Betriebsströme und Spannungen für unterschiedliche Betriebssituationen des elektronischen Gerätes ausgetauscht werden können. Gemäß einer weiteren vorteilhaften Ausgestaltung weist das Netztrennmittel ein elektrisch betätigbares Schaltelement auf und die zweiten Steuermittel sind dazu eingerichtet, das elektrisch betätigbare Schaltelement mit einer aus der wiederaufladbaren Batterie gewonnenen elektrischen Schaltspannung zu beaufschlagen. Ein elektrisch betätigbares Schaltelement, das mit einer aus der wiederaufladbaren Batterie gewonnenen elektrischen Schaltspannung beaufschlagt werden kann, erlaubt eine Verbindung des Netzteils mit dem Stromversorgungsnetz ohne zusätzliche Stromquelle in dem Netzteil.

Gemäß einer weiteren vorteilhaften Ausgestaltung weist das Netztrennmittel zusätzlich ein manuell bedienbares Schaltelement auf, wobei das manuell bedienbare Schaltelement dazu eingerichtet ist, ein Einschalten des Netzteils unabhängig von einer Spannung der wiederaufladbaren Batterie zu bewirken. Durch Verwendung eines zusätzlichen, manuell bedienbaren Schaltelementes kann ein Neustart des Netzteils auch bei einer vollständig entladenen wiederaufladbaren Batterie bewirkt werden.

Die oben genannte Aufgabe wird ebenso gelöst durch ein Verfahren zum Schalten eines Netzteils für ein elektronisches Gerät nach Anspruch 9.

Durch die im Anspruch 9 genannten Schritte ist eine automatische Netztrennung des Netzteils in solchen Fällen möglich, in denen das elektronische Gerät keine weitere Betriebsenergie aus dem Stromversorgungsnetz benötigt. Das Verbinden der Wandlerschaltung mit dem Stromversorgungsnetz, wenn ein Einschaltsignal erkannt wurde, erlaubt eine bedarfsgerechte Ansteuerung des Netzteils durch das elektronische Gerät. Weitere vorteilhafte Ausgestaltungen sind in den Unteransprüchen sowie der nachfolgenden ausführlichen Beschreibung angegeben. Die Erfindung wird nachfolgend anhand von mehreren Ausführungsbeispielen beschrieben, die unter Verwendung von Figuren näher erläutert werden. In den Figuren zeigen:
- Figur 1: eine Geräteanordnung gemäß einem ersten Ausführungsbeispiel der Erfindung,
- Figur 2: eine alternative Geräteanordnung,
- Figur 3: ein Ablaufdiagramm eines Verfahrens zum Überwachen eines Ladezustands einer wiederaufladbaren Batterie eines elektronischen Gerätes,
- Figur 4: ein Ablaufdiagramm eines Verfahrens zum Überwachen einer Signalisierung von Steuersignalen an ein Netzteil,
- Figur 5: zwei Kollaborationsdiagramme für eine Geräteanordnung umfassend ein elektronisches Gerät und ein Netzteil und
- Figur 6: zwei weitere Kollaborationsdiagramme für eine Geräteanordnung umfassend ein elektronisches Gerät und ein Netzteil.

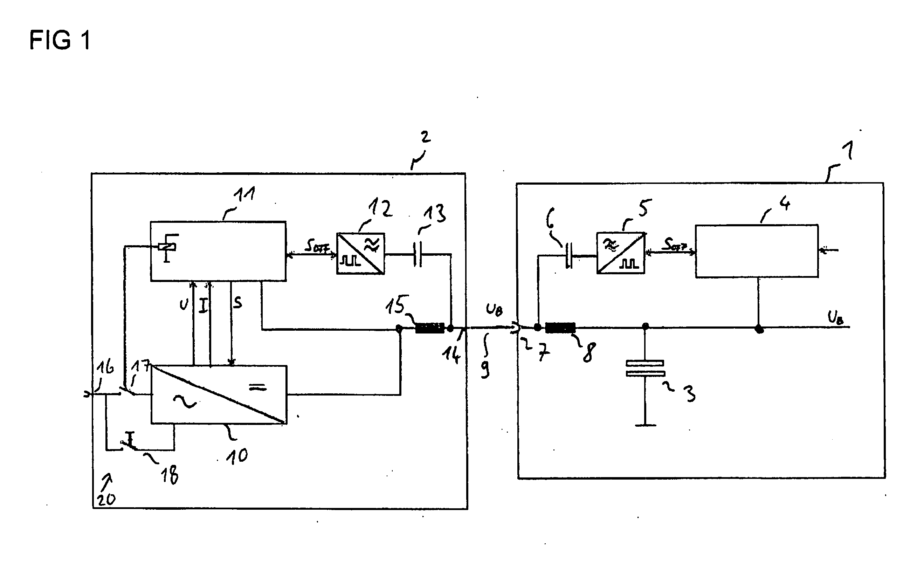

Figur 1 zeigt eine Geräteanordnung umfassend ein elektronisches Gerät 1 und ein Netzteil 2. Das elektronische Gerät 1, beispielsweise ein Laptop-Computer, umfasst eine wiederaufladbare Batterie 3, eine erste Steuerung 4 sowie eine Modulationsvorrichtung 5. Die Modulationsvorrichtung 5 ist mittels eines ersten Kondensator 6 kapazitiv mit einem Betriebsspannungseingang 7 gekoppelt. Die über den Betriebsspannungseingang 7 bereitgestellte Gleichspannung U_{B} wird über eine erste Filterspule 8 an die wiederaufladbare Batterie 3, die erste Steuerung 4 und weitere in dem elektronischen Gerät 1 enthaltene Komponenten wie beispielsweise einen Prozessor, der in der Figur 1 jedoch nicht dargestellt ist, übertragen.

Das elektronische Gerät 1 ist über eine Stromzuführungsleitung 9 mit dem Netzteil 2 verbunden. Das Netzteil 2 umfasst eine Wandlerschaltung 10, eine zweite Steuerung 11 sowie eine Demodulationsvorrichtung 12. Die Demodulationsvorrichtung 12 ist mit der zweiten Steuerung 11 und über einen zweiten Kondensator 13 kapazitiv mit einem Spannungsausgang 14 des Netzteiles 2 gekoppelt. Optional ist die Wandlerschaltung 10 ebenfalls mit der zweiten Steuerung 11 verbunden und kann durch die zweite Steuerung 11 angesteuert werden. Beispielsweise kann die Steuerung 11 eine Ausgangsspannung der Wandlerschaltung 10 mittels Pulsweitenmodulation steuern. Außerdem kann die zweite Steuerung 11 eine aktuell von der Wandlerschaltung 10 erzeugte Betriebsspannung U_{B} oder einen abgegebenen Betriebsstrom I überwachen.

Die Wandlerschaltung 10 stellt sekundärseitig die Betriebsspannung U_{B} über eine zweite Filterspule 15 an dem Spannungsausgang 14 bereit. Primärseitig ist die Wandlerschaltung 10 mit einem Netzeingang 16 des Netzteils 2 verbunden. Der Netzeingang 16 kann über ein erstes, elektrisch betätigbares Schaltelement 17 oder ein zweites, manuell bedienbares Schaltelement 18 mit der Wandlerschaltung 10 gekoppelt werden. Beispielsweise handelt es sich bei dem ersten Schaltelement 17 um ein elektromechanisches, elektro-optisches oder elektronisches Relais oder einen Thyristor. Bei dem zweiten Schaltelement 18 handelt es sich beispielsweise um einen Netztaster oder Schalter. Zusammen bilden das erste Schaltelement 17 und das zweite Schaltelement 18 ein Netztrennmittel 20, das zur wahlweisen Kopplung oder Trennung von Wandlerschaltung 10 und Netzeingang 16 dient.

Die in der Figur 1 schematisch dargestellte Geräteanordnung funktioniert wie folgt. Ist die Wandlerschaltung 10 über das erste Schaltelement 17 oder das zweite Schaltelement 18 mit einer Netzspannung verbunden, wird eine durch die Wandlerschaltung 10 bereitgestellte Gleichspannung über die Stromzuführungsleitung 9 an das elektronische Gerät übertragen. Erkennt die erste Steuerung 4 des elektronischen Gerätes 1, dass eine weitere Bereitstellung der Betriebsspannung U_{B} durch das Netzteil 2 nicht länger erforderlich ist, beispielsweise weil das elektronische Gerät 1 sich in einem ausschalteten Zustand oder in einem Bereitschaftszustand befindet und die wiederaufladbare Batterie 3 zumindest teilweise, überwiegend oder vollständig geladen ist, erzeugt sie ein Abschaltsignal S_{OFF}. Das Abschaltsignal S_{OFF} wird mittels der Modulationsvorrichtung 5 als Hochfrequenz-Wechselspannungssignal über die Stromzuführungsleitung 9 an die Demodulationsvorrichtung 12 übertragen und durch sie dekodiert. Die zweite Steuervorrichtung 11 erkennt das dekodierte Abschaltsignal S_{OFF} und trennt daraufhin die Wandlerschaltung 10 von dem Netzeingang 16. Beispielsweise kann die zweite Steuerung 11 durch geeignete Beschaltung eines Relais die Wandlerschaltung 10 galvanisch von dem Netzeingang 16 trennen. Ist die Wandlerschaltung 10 von dem Stromversorgungsnetz getrennt, entnimmt sie ihm keine weitere Leistung.

Verbraucht das elektronische Gerät 1 weiterhin elektrische Energie, beispielsweise zur Überwachung von Ereignissen in einem Bereitschaftszustand, entlädt sich die wiederaufladbare Batterie 3 mit fortschreitender Zeit. Unterscheidet die wiederaufladbare Batterie 3 eine kritische Schwelle, beispielsweise eine durch die erste Steuerung 4 überwachte Batteriespannung, signalisiert die erste Steuerung 4 an die zweite Steuerung 11 wie oben beschrieben, dass die Wandlerschaltung 10 erneut mit dem Netzeingang 16 verbunden werden soll. Beispielsweise schließt die zweite Steuerung hierzu das erste Schaltelement 17.

Es wird darauf hingewiesen, dass die oben beschriebenen Funktionen durch eine unidirektionale Kommunikation von dem elektronischen Gerät 1 zu dem Netzteil 2, also ohne Rückkanal von dem Netzteil 2 zu dem elektronischen Gerät 1, durchgeführt werden können. Selbstverständlich kann die Anordnung gemäß Figur 1 durch Verwendung von Modulatoren und Demodulatoren im Netzteil 2 und dem elektronischen Gerät 1 zur bidirektionalen Kommunikation erweitert werden, um weitere, nachfolgend beschriebene Steuerverfahren zu implementieren.

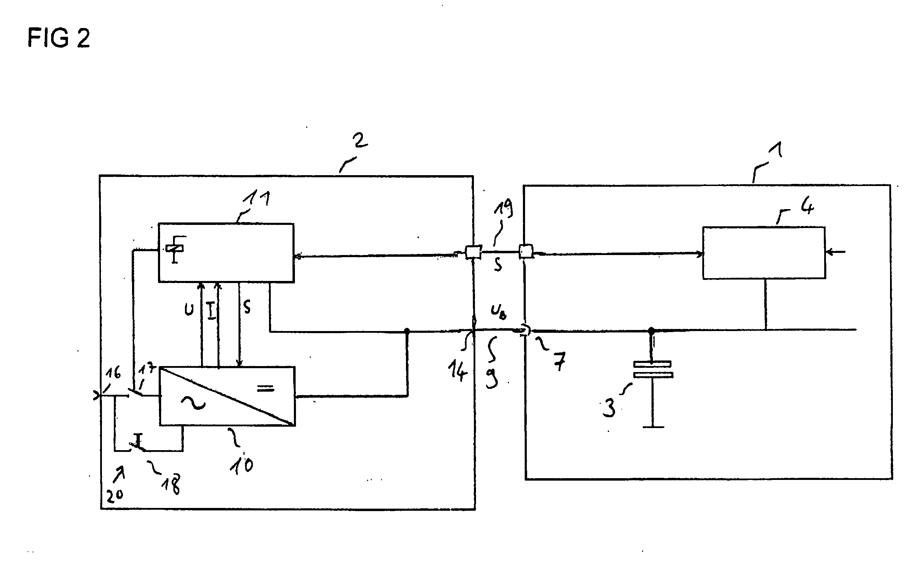

Die Figur 2 zeigt eine alternative, nicht beanspruchte Ausgestaltung einer Geräteanordnung umfassend ein elektronisches Gerät 1 und ein Netzteil 2. Im Unterschied zu dem in der Figur 1 dargestellten Ausführungsbeispiel sind das elektronische Gerät 1 und das Netzteil 2 gemäß der Figur 2 über zwei unterschiedliche Verbindungen miteinander gekoppelt. Eine Stromzuführungsleitung 9 dient zur Übertragung einer Betriebsspannung U_{B} von dem Netzteil 2 an das elektronische Gerät 1. Zusätzlich sind das elektronische Gerät 1 und das Netzteil 2 über eine Datenleitung 19 miteinander verbunden. Beispielsweise kann es sich bei der Datenleitung 19 um eine USB- oder I²C-Verbindung handeln. Die Leitungen 9 und 19 können als gesonderte Verbindungen, beispielsweise als standardisierte Klinkenstecker- und USB-Verbindungen, oder als unterschiedliche Leitungen einer gemeinsamen Steckverbindung ausgeführt sein.

Zwar erfordert die in der Figur 2 dargestellte Lösung gegenüber der in der Figur 1 dargestellten Lösung eine zusätzliche Datenleitung 19, jedoch besitzt die Geräteanordnung gemäß Figur 2 den zusätzlichen Vorteil, dass auf eine Aufmodulation von Steuersignalen auf die Betriebsgleichspannung U_{B} verzichtet werden kann. Zusätzlich besitzt die in der Figur 2 dargestellte Anordnung den Vorteil, dass sie eine bidirektionale Kommunikation zwischen einer ersten Steuerung 4 des elektronischen Gerätes 1 und einer zweiten Steuerung 11 des Netzteils 2 gestattet. Somit können mit der Geräteanordnung 1 gemäß der Figur 2 besonders flexible Steuerverfahren umgesetzt werden. Zudem kann in der Anordnung gemäß Figur 2 auf eine elektrisch Entkopplung von Gleich- und Wechselspannungsanteilen durch Filterelemente verzichtet werden.

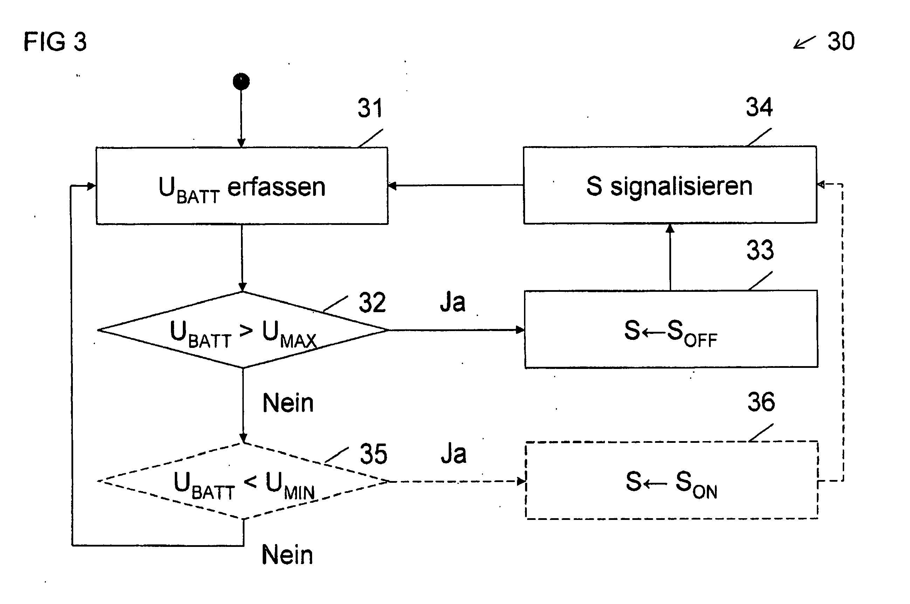

Figur 3 zeigt ein Verfahren 30 zum Überwachen einer Batteriespannung U_{BATT} einer wiederaufladbaren Batterie 3. Das Verfahren gemäß Figur 3 steht dabei beispielhaft für die Überwachung verschiedener Zustände des elektronischen Geräts 1.

In einem Schritt 31 wird eine Batteriespannung U_{BATT} einer wiederaufladbaren Batterie durch eine Überwachungsschaltung erfasst. Beispielsweise kann es sich bei der Überwachungsschaltung um eine diskrete analoge Schaltung, die die Batteriespannung U_{BATT} oder einen Entladestrom I überwacht, oder um einen Teil der ersten Steuerung 4 gemäß einer der Ausführungsbeispiele nach Figur 1 oder 2 handeln.

In einem Schritt 32 wird überprüft, ob die erfasste Batteriespannung U_{BATT} über einem vorgegebenen oberen Grenzwert U_{MAX} liegt. Beispielsweise kann als Schwellwert U_{MAX} eine Spannung angegeben werden, die kennzeichnet, dass die wiederaufladbare Batterie 3 zu mehr als 95 Prozent geladen ist.

Ist dies der Fall, wird in einem Schritt 33 ein Steuersignal S auf einen Wert S_{OFF} gesetzt. Beispielsweise kann die erste Steuerung 4 nach Auswertung der Batteriespannung U_{BATT} einen entsprechenden Registerwert in eine Steuerschaltung einschreiben oder an die Modulationsvorrichtung 5 übertragen.

In einem weiteren Verfahrensschritt 34 wird der bereitgestellte Steuerwert S an das Netzteil 2 signalisiert. Beispielsweise kann dies durch die Modulationsvorrichtung 5 mittels Modulation eines Hochfrequenz-Wechselspannungssignals auf eine Betriebsspannung U_{B} der Versorgungsleitung 9 erfolgen. Alternativ ist auch eine andere Signalisierung des Steuersignals S, beispielsweise durch Übertragung über die Datenleitung 19, möglich. Dabei kann die Signalisierung im Schritt 34 entweder zu regelmäßigen Zeitpunkten, beim Auftreten eines vorbestimmten Ereignisses, beispielsweise einer Erkennung einer geänderten Batteriespannung U_{BATT} durch die erste Steuerung 4, oder auf Anforderung der zweiten Steuerung 11 erfolgen. Nachfolgend wird das Verfahren im Schritt 31 wieder aufgenommen, indem eine neue Batteriespannung U_{BATT} erfasst wird.

Liegt die Batteriespannung U_{BATT} im Schritt 32 nicht über dem vorgegeben oberen Grenzwert U_{MAX}, wird in einem optionalen Schritt 35 überprüft, ob die Betriebsspannung U_{B} unter einem unteren vorgegebenen Grenzwert U_{MIN} liegt. Beispielsweise kann es sich bei dem zweiten Grenzwert U_{MIN} um eine Batteriespannung U_{BATT} handeln, die anzeigt dass die wiederaufladbare Batterie 3 zu weniger als zehn Prozent geladen ist.

Wird dies erkannt, wird in einem nachfolgenden Schritt 36 ein Einschaltsignal S_{ON} als Steuersignal S erzeugt. Das Einschaltsignal S_{ON} wird dann im Schritt 34 wiederum an das Netzteil 2 übertragen.

Liegt die Spannung U_{BATT} unter dem ersten Grenzwert U_{MAX} aber über dem zweiten Grenzwert U_{MIN}, wird das Verfahren im Schritt 31 fortgesetzt, ohne dass ein neues Steuersignal S erzeugt oder signalisiert würde.

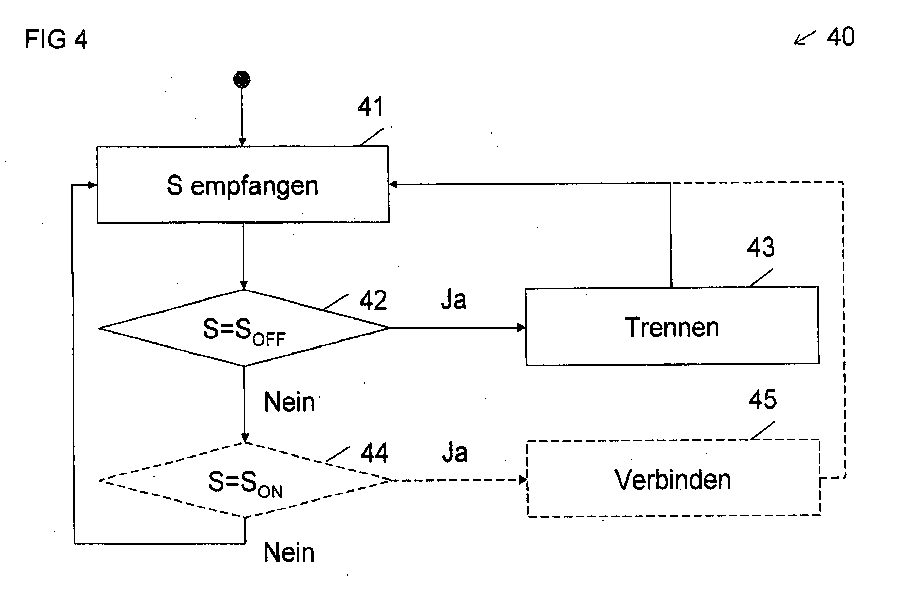

Figur 4 zeigt ein korrespondierendes Verfahren 40 zur Überwachung von durch das elektronische Gerät 1 erzeugten Steuersignalen S durch das Netzteil 2.

In einem Schritt 41 wird ein Steuersignal S empfangen. Beispielsweise kann eine Demodulationsvorrichtung 12 dazu verwendet werden, ein Hochfrequenz-Wechselspannungssignal von einer Stromversorgungsleitung 9 zu demodulieren. Alternativ kann das Steuersignal S auch auf anderem Wege, beispielsweise mittels einer zusätzlichen Datenleitung 19 an das Netzteil 2 übertragen und dort empfangen werden.

In einem Schritt 42 überprüft die zweite Steuerung 11, ob es sich bei dem übertragenen Steuersignal S um ein Abschaltsignal S_{OFF} handelt. Ist dies der Fall, wird in einem nachfolgenden Schritt 43 die Wandlerschaltung 10 von dem Netzeingang 16 getrennt. Beispielsweise kann ein elektronisches Relais, das den Netzeingang 16 mit der Wandlerschaltung 10 verbindet, geöffnet werden. Alternativ kann ein zur Verbindung genutzter Thyristor nicht weiter mit einem Zündsignal oder ähnlichem Ansteuersignal versorgt werden, so dass er beim nächsten Phasendurchgang der primären Netzwechselspannung sperrt.

Danach wird das Verfahren im Schritt 41 fortgesetzt, in dem die zweite Steuerung 11 des Netzteils 2 einen Eingang weiterhin auf den Empfang von Steuersignalen S überwacht. In einer bevorzugten Ausgestaltung wird die zweite Steuerung 11 im vom Stromversorgungsnetz getrennten Zustand hierzu über die Stromzuführungsleitung 9 von der wiederaufladbaren Batterie 3 des elektronischen Gerätes 1 versorgt. Alternativ ist auch eine Versorgung über eine eingebaute Batterie des Netzteils 2 oder eine primärseitige Versorgung aus dem Energieversorgungsnetz, beispielsweise mittels eines leistungsschwachen und effizienten Hilfswandlers, möglich.

Handelt es sich bei dem Steuersignal S im Schritt 42 nicht um ein Abschaltsignal S_{OFF} wird in einem optionalen Schritt 44 überprüft, ob es sich bei dem Steuersignal um ein Einschaltsignal S_{ON} handelt. Ist dies der Fall, wird in Schritt 45 die Wandlerschaltung 10 mit dem Netzeingang 16 verbunden, so dass das Netzteil 2 erneut eine Betriebsspannung U_{B} an das elektronische Gerät 1 bereitstellt. Danach wird das Verfahren erneut im Schritt 41 fortgesetzt.

Handelt es sich bei dem empfangenen Steuersignal S weder um ein Ausschaltsignal S_{OFF} noch um ein Einschaltsignal S_{ON} kann die zweite Steuerung 11 weitere, in der Figur 4 nicht dargestellte Schritte ausführen, die die Ansteuerung der Wandlerschaltung 10 beziehungsweise des ersten Schaltelementes 17 betreffen. Nachfolgend wird das Verfahren erneut im Schritt 41 fortgesetzt.

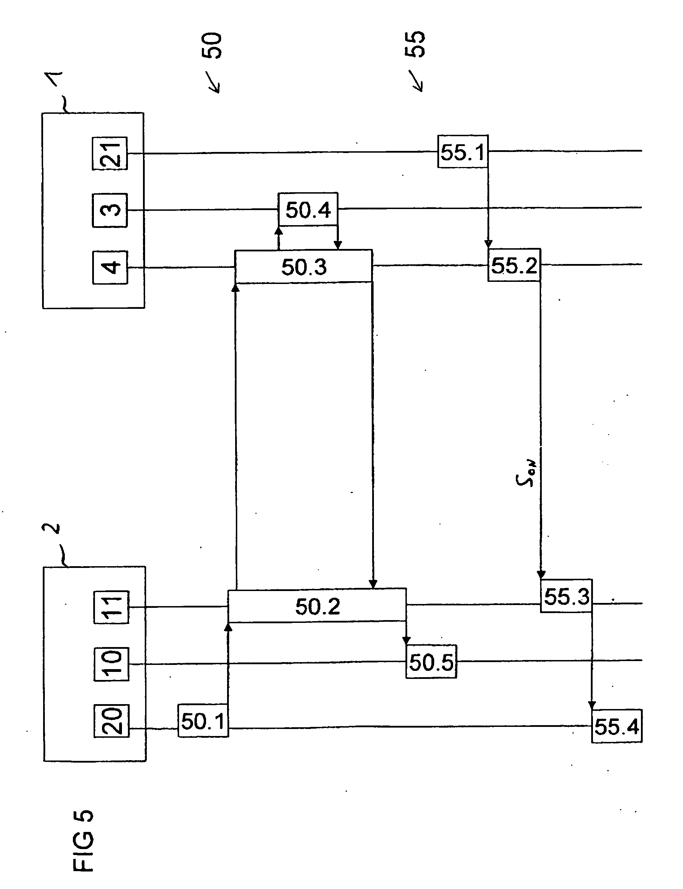

Figur 5 zeigt zwei Szenarien 50 und 55 zur Steuerung eines Netzteils 2 durch ein elektronisches Gerät 1 beim Einschalten. Ein Einschalten kann dabei durch das Netzteil 2 oder das elektronische Gerät 1 veranlasst werden.

In dem ersten Szenario 50 wird in einem ersten Schritt 50.1 ein Einschaltsignal für das Netzteil 2 erzeugt. Beispielsweise kann das zweite Schaltelement 18 des Netztrennmittels 20 manuell betätigt werden. Hierdurch wird die Wandlerschaltung 10 mit dem Netzeingang 16 verbunden, woraufhin die Wandlerschaltung 10 eine Betriebsspannung U_{B} an die zweite Steuerung 11 bereitstellt.

Die zweite Steuerung 11 erkennt in einem Schritt 50.2, dass das Netzteil 2 aktiviert wurde und fragt vorbestimmter Betriebsdaten des elektronischen Geräts 1 mittels einer Abfrage ab. Beispielsweise kann das Netzteil 2 das elektronische Gerät 1 dazu auffordern, eine Ladekapazität, eine Ladespannung oder einen Ladestrom einer wiederaufladbaren Batterie 3 zu ermitteln.

In einem Schritt 50.3 erfasst die erste Steuerung 4 die Anfrage der zweiten Steuerung 11 und fragt beispielsweise die Kapazität und den Ladezustand der wiederaufladbaren Batterie 3 des elektronischen Gerätes 1 ab. Sobald in einem weiteren Schritt 50.4 die erforderlichen Daten von der Batterie 3 an die erste Steuerung 4 gemeldet wurden, werden diese mittels einer weiteren Nachricht zurück an das Netzteil 2 und dessen zweite Steuerung 11 übertragen.

Die Steuerung 11 konfiguriert daraufhin die Wandlerschaltung 10 zum Bereitstellen einer geeigneten Betriebsspannung U_{B} oder eines geeigneten Betriebsstroms I zur Versorgung des elektronischen Gerätes 1 und/oder zum Laden einer in das elektronischen Gerät 1 aufgenommenen wiederaufladbaren Batterie 3. Dies ist in der Figur 5 durch den Schritt 50.5 dargestellt.

Das zweite Szenario 55 zeigt das Einschalten des elektronischen Gerätes 1 und ein nachfolgendes Verbinden des Netzteils 2 mit dem Netzeingang 16.

Hierzu übermittelt eine weitere Komponente 21 des elektronischen Gerätes 1, beispielsweise ein Einschalttaster des elektronischen Geräts 1, eine Spannungsüberwachungsschaltung der Batterie 3 oder eine Zeitsteuerung des elektronischen Geräts 1, in einem Schritt 55.1 eine Einschaltanforderung an die erste Steuerung 4.

In einem Schritt 55.2 überträgt die erste Steuerung 4 daraufhin ein Einschaltsignal S_{ON} an die zweite Steuerung 11. Die zweite Steuerung 11 übermittelt in einem Schritt 55.3 ein geeignetes Ansteuersignal an das Netztrennmittel 20, um die Wandlerschaltung 10 mit dem Netzeingang 16 zu verbinden. Dies wird im Schritt 55.4 durchgeführt.

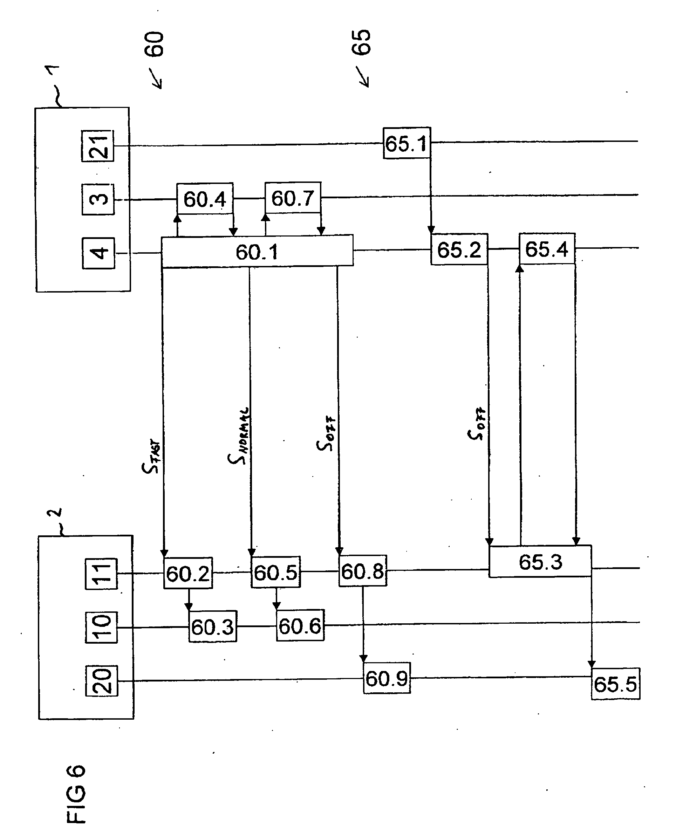

Figur 6 zeigt zwei weitere Szenarien zur Steuerung eines Netzteils 2 einer Geräteanordnung. Das dritte Szenario 60 zeigt eine verbesserte Ansteuerung des Netzteils 2 zum Schnellladen einer wiederaufladbaren Batterie 3. Das vierte Szenario 65 zeigt einen Ablauf zum Abschalten des elektronischen Geräts 1.

In dem dritten Szenario 60 wird durch die erste Steuerung 4 erkannt, dass eine Schnellladung der wiederaufladbaren Batterie 3 gewünscht ist. Beispielsweise kann diese explizit durch eine weitere Komponente 21 des elektronischen Gerätes 1 angefordert werden, oder aufgrund einer vollständigen Entladung der wiederaufladbaren Batterie 3 selbstständig von der ersten Steuerung 4 bestimmt werden.

Zu Beginn eines Schrittes 60.1 stellt die erste Steuerung 4 ein Steuersignal S_{FAST} zum Aktivieren einer Schnellladefunktion des Netzteils 2 bereit. Das Steuersignal S_{FAST} wird an die zweite Steuerung 11 übertragen. In einem Schritt 60.2 konfiguriert die zweite Steuerung 11 die Wandlerschaltung 10 durch Übertragung entsprechender Ansteuersignale derart, dass sie einen besonders hohen Betriebsstrom I an das elektronische Gerät 1 abgibt. Dies wird im Schritt 60.3 durchgeführt.

Die erste Steuerung 4 überwacht fortlaufend die Batteriespannung U_{L} ; der wiederaufladbaren Batterie 3. Wird in einem Schritt 60.4 erkannt, dass die wiederaufladbare Batterie eine erste Schwellspannung überschritten hat, beispielsweise weil die wiederaufladbare Batterie 3 zu 85 Prozent geladen ist, übermittelt die erste Steuerung 4 ein weiteres Signal S_{NORMAL} an die zweite Steuerung 11. Die zweite Steuerung 11 wertet das Steuersignal S_{NORMAL} in einem Schritt 60.5 aus und konfiguriert die Wandlerschaltung 10 in einem Schritt 60.6 derart, dass diese nunmehr einen normalen oder verringerten Strom I an das elektronische Gerät 1 bereitstellt.

In einem Schritt 60.7 erkennt die erste Steuerung 4, dass die wiederaufladbare Batterie 3 einen weiteren Schwellwert überschritten hat. Beispielsweise kann durch Erkennung einer Betriebstemperatur der wiederaufladbaren Batterie 3 oder einer Ladespannungskurve der wiederaufladbaren Batterie 3 eine vollständige Ladung der wiederaufladbaren Batterie 3 erkannt werden. Daraufhin überträgt die erste Steuerung 4 ein Abschaltsignal S_{OFF} an die zweite Steuerung 11, die dieses in einem Schritt 60.8 empfängt. Als Reaktion auf Empfang des Steuersignals S_{OFF} unterbricht die zweite Steuerung 11 das erste Schaltelement 17 des Netztrennmittels 20 und trennt somit die Wandlerschaltung 10 von dem Netzeingang 16. Dies ist in der Figur 6 als Schritt 60.9 dargestellt.

Das in dem dritten Szenario 60 dargestellte Ladeverfahren für die wiederaufladbare Batterie des elektronischen Gerätes 1 ermöglicht eine besonders schnelle Aufladung einer wiederaufladbaren Batterie 3 und gleichzeitig eine bedarfsgerechte Trennung des Netzteils 2 von einem Netzeingang 16.

In Zusammenarbeit mit weiteren Komponenten des elektronischen Gerätes 1, beispielsweise einer Energiesparschaltung oder -software eines Laptops, können besonders energiesparende Steuerungsverfahren für die Geräteanordnung durchgeführt werden. Beispielsweise ist es möglich, das Netzteil 2 so lange von einem Stromversorgungsnetz zu trennen, bis ein Ladezustand einer wiederaufladbaren Batterie 3 unter einem vorbestimmten Pegel abgefallen ist, und erst dann die wiederaufladbare Batterie 3 mit einem hohen Strom erneut zu laden. Durch die zyklische Trennung und Verbindung der Wandlerschaltung 10 von dem Netzeingang 16 kann die mittlere elektrische Leistungsaufnahme aus einem Stromversorgungsnetz bei fortwährender Funktion des elektronischen Gerätes 1 sichergestellt werden. Gleichzeitig arbeitet die Wandlerschaltung 10 im eingeschalteten Zustand nahe ihrer Maximalleistung und daher mit einem besseren Wirkungsgrad.

Das vierte Szenario 65 zeigt eine Abschaltung des elektronischen Gerätes 1 durch eine weitere Komponente 21 des elektronischen Gerätes. In einem Schritt 65.1 übermittelt die Komponente 21 eine Abschaltanfrage an die erste Steuerung 4, ausgelöst beispielsweise durch eine Betätigung einer Standby-oder Energiespartaste des elektronischen Geräts 1. Die erste Steuerung 4 überträgt daraufhin in einem Schritt 65.2 ein Abschaltsignal S_{OFF} an die zweite Steuerung 11.

In einem Schritt 65.3 empfängt die zweite Steuerung 11 das Abschaltsignal S_{OFF} und übermittelt daraufhin eine Anfrage zurück an die erste Steuerung 4. Beispielsweise kann die zweite Steuerung 11 von der ersten Steuerung 4 abfragen, ob in dem elektronischen Gerät 1 eine Überwachungsfunktion aktiv ist, wie beispielsweise eine so genannte Wake-on-LAN-Funktion (WoL) oder eine Timerfunktion, bevor die zweite Steuerung 11 die Wandlerschaltung 10 von dem Netzeingang 16 trennt. Die erste Steuerung 4 übermittelt in einem Schritt 65.4 die benötigten Informationen zurück an die zweite Steuerung 11.

Gelangt die erste Steuerung 4 oder die zweite Steuerung 11 zu der Auffassung, dass eine weitere Stromversorgung des elektronischen Geräts 1 durch das Netzteil 2 nicht weiter erforderlich ist, beispielsweise weil keine Überwachungsfunktion des elektronischen Geräts 1 aktiviert ist oder ein Ladezustand einer wiederaufladbaren Batterie 3 ausreichend ist, um das elektronische Gerät 1 über einen längeren Zeitraum mit einer Batteriespannung U_{BATT} zu versorgen, wird in einem Schritt 65.5 die Wandlerschaltung 10 von dem Netzeingang 16 getrennt.

Das vierte Szenario 65 verdeutlicht, dass die Funktionalität zur Ansteuerung des Netzteils 2 durch die bidirektionale Kommunikation zwischen dem elektronischen Gerät 1 und dem Netzteil 2 beinahe beliebig zwischen der ersten Steuerung 4 und der zweiten Steuerung 11 verteilt werden kann. Insbesondere können die erste Steuerung 4 und die zweite Steuerung 11 Informationen über Parameterwerte der Wandlerschaltung 10, der wiederaufladbaren Batterie oder weiterer Komponenten 21 des elektronischen Gerätes miteinander austauschen, um eine optimale Strategie zur Ansteuerung des Netzteiles 2 zu ermitteln.

Es wird darauf hingewiesen dass die in den Figuren 5 und 6 dargestellten Szenarien 50, 55, 60 und 65 nur beispielhaften Charakter besitzen und eine Vielzahl weiterer Ansteuermöglichkeiten für das Netzteil 2 der Geräteanordnungen gemäß den beschriebenen Ausführungsbeispielen möglich sind.

## Patentansprüche

1. Geräteanordnung umfassend eine elektronisches Gerät (1) mit einer wiederaufladbaren Batterie (3) und ein mit dem elektronischen Gerät (1) elektrisch koppelbares Netzteil (2) mit einer Wandlerschaltung (10) zum Erzeugen wenigstens einer Betriebsspannung (U_{B}) für das elektronische Gerät (1) aus einer Versorgungsspannung eines Stromversorgungsnetzes an einem Spannungsausgang (14), wobei die Betriebsspannung (U_{B}) eine Gleichspannung ist, das elektronische Gerät (1) und der Spannungsausgang (14) des Netzteils (2) über wenigstens eine Stromzuführungsleitung (9) zum Übertragen der Gleichspannung miteinander verbindbar sind und das elektronische Gerät (1) Überwachungsmittel zum Überwachen wenigstens eines Zustands des elektronischen Geräts (1) und/oder der wiederaufladbaren Batterie (3), erste Steuermittel (4) zum Erzeugen wenigstens eines Steuersignals (S) in Abhängigkeit des überwachten Zustands und erste Signalisierungsmittel zum Signalisieren des erzeugten Signals (S) an das Netzteil (2) aufweist, **dadurch gekennzeichnet, dass** die ersten Signalisierungsmittel zum Aufmodulieren eines dem Steuersignal (S) zugeordneten Hochfrequenz-Wechselspannungssignals auf die Stromzuführungsleitung (9) eingerichtet sind, das Netzteil (2) Netztrennmittel (20) zum elektrischen Trennen der Wandlerschaltung (10) von dem Stromversorgungsnetz, zweite Signalisierungsmittel zum Erkennen eines signalisierten Steuersignals (S) des ersten Signalisierungsmittels (4), die kapazitiv mit dem Spannungsausgang (14) gekoppelte und zum Demodulieren des aufmodulierten Steuersignals (S) aus dem Hochfrequenz-Wechselspannungssignal eingerichtet sind, und zweite Steuermittel (11) zum Ansteuern des Netztrennmittels (20) in Abhängigkeit des erkannten Steuersignals (S) aufweist.

2. Geräteanordnung nach Anspruch 1,
**dadurch gekennzeichnet, dass**
die zweiten Steuermittel (11) dazu eingerichtet sind, die Wandlerschaltung (10) durch das Netztrennmittel (20) beim Erkennen eines Abschaltsignals (S_{OFF}) der ersten Steuermittel (4) von dem Stromversorgungsnetz zu trennen.

3. Geräteanordnung nach Anspruch 1 oder 2,**dadurch gekennzeichnet, dass**
die zweiten Steuermittel (11) dazu eingerichtet sind, die Wandlerschaltung (10) durch das Netztrennmittel (20) beim Erkennen eines Einschaltsignals (S_{ON}) der ersten Steuermittel (4) mit dem Stromversorgungsnetz.zu verbinden.

4. Geräteanordnung nach einem der Ansprüche 1 bis 3,
**dadurch gekennzeichnet, dass**
die zweiten Signalisierungsmittel zusätzlich zum Übertragen von Steuersignalen (S) an die ersten Signalisierungsmittel eingerichtet sind.

5. Geräteanordnung nach Anspruch 4, **dadurch gekennzeichnet, dass** die zweiten Steuermittel (11) dazu eingerichtet sind, Steuersignale (S) zur Abfrage von Geräteeigenschaften des elektronischen Gerätes (1) an das erste Steuermittel (4) zu übertragen.

6. Geräteanordnung nach Anspruch 4 oder 5, **dadurch gekennzeichnet, dass** die zweiten Steuermittel (11) dazu eingerichtet sind, Steuersignale (S) für Parameterwerte betreffend von dem Netzteil erzeugbarer Betriebsspannungen und/oder Betriebsströme an das erste Steuermittel (4) zu übertragen.

7. Geräteanordnung nach einem der Ansprüche 1 bis 6,
**dadurch gekennzeichnet, dass**
das Netztrennmittel (20) ein elektrisch betätigbares Schaltelement (17) aufweist und die zweiten Steuermittel (11) dazu eingerichtet sind, das elektrisch betätigbare Schaltelement (17) mit einer aus der wiederaufladbaren Batterie (3) gewonnenen elektrischen Schaltspannung zu beaufschlagen.

8. Geräteanordnung nach Anspruch 7,
**dadurch gekennzeichnet, dass**
das Netztrennmittel (20) zusätzlich ein manuell bedienbares Schaltelement (18) aufweist, wobei das manuell bedienbare Schaltelement (18) dazu eingerichtet ist, ein Einschalten des Netzteils (2) unabhängig von einer Spannung (U_{BATT}) der wiederaufladbaren Batterie (3) zu bewirken.

9. Verfahren zum Schalten eines Netzteils (2) mit einem Spannungsausgang (14) zum Anschluss eines elektronisches Geräts (1), wobei das elektronische Gerät (1) und das Netzteil (2) über wenigstens eine Stromzuführungsleitung (9) zum Übertragen einer Gleichspannung von dem Spannungsausgang (14) für den Betrieb des elektronischen Geräts (1) miteinander verbindbar sind, umfassend:
- Überwachen eines Zustands des elektronischen Geräts (1) und/oder des Zustands einer wiederaufladbaren Batterie (3) des elektronischen Gerätes (1);
- Erzeugen wenigstens eines Steuersignals (S) in Abhängigkeit des überwachten Zustands durch das elektronische Gerät (1) ;
- Signalisieren des wenigstens einen erzeugten Steuersignals (S) von dem elektronischen Gerät (1) an das Netzteil (2) durch Aufmodulieren eines dem Steuersignal (S) zugeordneten Hochfrequenz-Wechselspannungssignals auf die Stromzuführungsleitung (9) ;
- Erkennen des signalisierten Steuersignals (S) durch das Netzteil (2) durch Demodulieren des aufmodulierten Steuersignals (S) aus dem Hochfrequenz-Wechselspannungssignal; und
- Ansteuern eines Netztrennmittels (20) des Netzteils (2) zum Trennen oder Verbinden einer Wandlerschaltung (10) von beziehungsweise mit einem Stromversorgungsnetz, wenn im Schritt des Erkennens ein Abschaltsignals (S_{OFF}) beziehungsweise ein Einschaltsignal (S_{ON}) durch das Netzteil (2) erkannt wurde.

10. Verfahren nach Anspruch 9, wobei im Schritt des Überwachens durch eine Überwachungsschaltung zumindest der Ladezustand der wiederaufladbaren Batterie (3) überwacht wird.

11. Verfahren nach Anspruch 9 oder 10, wobei im Schritt des Überwachens durch eine Überwachungsschaltung zumindest der Betriebszustand des elektronischen Geräts (1) überwacht wird.

12. Verfahren nach einem der Ansprüche 9 bis 11, mit den zusätzlichen Schritten:
- Übertragen von Betriebszustandsdaten von dem elektronischen Gerät (1) an das Netzteil (2) und
- Ansteuern der Netztrennmittel (20) und/oder der Wandlerschaltung (10) in Abhängigkeit der übertragenen Betriebszustandsdaten.

13. Verfahren nach Anspruch 12, **dadurch gekennzeichnet dass** im Schritt des Übertragens von Betriebszustandsdaten ein Schnellladestrom, ein Normalladestrom, ein Erhaltungsladestrom, ein Betriebsstrom, eine Betriebsspannung, ein Ladzustand, ein Bereitschaftszustand, ein Energiesparzustand und/oder ein Normalbetriebszustand an das Netzteil (2) übertragen wird.

14. Verfahren nach einem der Ansprüche 9 bis 13 mit den zusätzlichen Schritten:
- Abfragen von Parametern des elektronischen Gerätes (1) durch das Netzteil (2) und
- Ansteuern der Netztrennmittel (20) und/oder der Wandlerschaltung (10) in Abhängigkeit der abgefragten Parameter.

15. Verfahren nach Anspruch 14, **dadurch gekennzeichnet, dass** im Schritt des Abfragens von Parametern ein Zeitpunkt und/oder eine Zeitdauer einer letzten Ladung der wiederaufladbaren Batterie (3), ein Ladezustand der wiederaufladbaren Batterie (3), eine Energiespareinstellung und/oder eine Netztrenneinstellung des elektronischen Gerätes (1) oder ein Betriebszustand des elektronischen Gerätes (1) abgefragt werden.

## Claims

1. Device arrangement comprising an electronic device (1), having a rechargeable battery (3), and a power adapter (2) which can be electrically coupled to the electronic device (1) and has a converter circuit (10) for producing at least one operating voltage (U_{B}) for the electronic device (1) from a supply voltage from a power supply system at a voltage output (14), wherein the operating voltage (U_{B}) is a DC voltage, the electronic device (1) and the voltage output (14) of the power adapter (2) can be connected to one another via at least one power supply line (9) for transmitting the DC voltage, and the electronic device (1) has monitoring means for monitoring at least one state of the electronic device (1) and/or of the rechargeable battery (3), first control means (4) for producing at least one control signal (S) as a function of the monitored state, and first signaling means for signaling the produced signal (S) to the power adapter (2), **characterized in that** the first signaling means are designed for modulating a radio-frequency AC voltage signal, which is associated with the control signal (S), onto the power supply line (9), and the power adapter (2) has power supply system disconnecting means (20) for electrically disconnecting the converter circuit (10) from the power supply system, second signaling means for identifying a signaled control signal (S) from the first signaling means (4), which second signaling means are capacitively coupled to the voltage output (14) and are designed for demodulating the modulated control signal (S) from the radio-frequency AC voltage signal, and second control means (11) for operating the power supply system disconnecting means (20) as a function of the identified control signal (S).

2. Device arrangement according to Claim 1,
**characterized in that**
the second control means (11) are designed to disconnect the converter circuit (10) from the power supply system by means of the power supply system disconnecting means (20) on identifying a switch-off signal (S_{OFF}) of the first control means (4).

3. Device arrangement according to Claim 1 or 2,
**characterized in that**
the second control means (11) are designed to connect the converter circuit (10) to the power supply system by means of the power supply system disconnecting means (20) on identifying a switch-on signal (S_{ON}) of the first control means (4).

4. Device arrangement according to one of Claims 1 to 3,
**characterized in that**
the second signaling means are additionally designed for transmitting control signals (S) to the first signaling means.

5. Device arrangement according to Claim 4,
**characterized in that**
the second control means (11) are designed for transmitting control signals (S) for checking device characteristics of the electronic device (1) to the first control means (4).

6. Device arrangement according to Claim 4 or 5,
**characterized in that**
the second control means (11) are designed for transmitting control signals (S) for parameter values relating to operating voltages and/or operating currents which can be produced by the power adapter to the first control means (4).

7. Device arrangement according to one of Claims 1 to 6,
**characterized in that**
the power supply system disconnecting means (20) has an electrically operable switching element (17), and the second control means (11) are designed to apply an electrical switching voltage, which is obtained from the rechargeable battery (3), to the electrically operable switching element (17).

8. Device arrangement according to Claim 7,
**characterized in that**
the power supply system disconnecting means (20) additionally has a manually operable switching element (18), wherein the manually operable switching element (18) is designed for switching on the power adapter (2) independently of a voltage (U_{BATT}) of the rechargeable battery (3).

9. Method for switching a power adapter (2) having a voltage output (14) for connecting an electronic device (1), wherein the electronic device (1) and the power adapter (2) can be connected to one another via at least one power supply line (9) for transmitting a DC voltage from the voltage output (14) for the operation of the electronic device (1), comprising:
- monitoring a state of the electronic device (1) and/or the state of a rechargeable battery (3) for the electronic device (1);
- producing at least one control signal (S) as a function of the monitored state by the electronic device (1);
- signaling the at least one produced control signal (S) from the electronic device (1) to the power adapter (2) by modulating a radio-frequency AC voltage signal, which is associated with the control signal (S), onto the power supply line (9) ;
- identifying the signaled control signal (S) by means of the power adapter (2) by demodulating the modulated control signal (S) from the radio-frequency AC voltage signal; and
- operating a power supply system disconnecting means (20) in the power adapter (2) for disconnecting or connecting a converter circuit (10) from or to a power supply system when the power adapter (2) has identified a switch-off signal (S_{OFF}) or a switch-on signal (S_{ON}) in the identification step.

10. Method according to Claim 9, wherein a monitoring circuit monitors at least the state of charge of the rechargeable battery (3) in the monitoring step.

11. Method according to Claim 9 or 10, wherein a monitoring circuit monitors at least the operating state of the electronic device (1) in the monitoring step.

12. Method according to one of Claims 9 to 11, having the additional steps:
- transmitting operating state data from the electronic device (1) to the power adapter (2), and
- operating the power supply system disconnecting means (20) and/or the converter circuit (10) as a function of the transmitted operating state data.

13. Method according to Claim 12,
**characterized in that**
a rapid charging current, a normal charging current, a maintenance charging current, an operating current, an operating voltage, a state of charge, a standby state, an energy saving state and/or a normal operating state are/is transmitted to the power adapter (2) in the step of transmitting operating state data.

14. Method according to one of Claims 9 to 13, having the additional steps:
- checking of parameters of the electronic device (1) by the power adapter (2), and
- operating the power supply system disconnecting means (20) and/or the converter circuit (10) as a function of the checked parameters.

15. Method according to Claim 14,
**characterized in that**
a time and/or a time duration of a most recent charge of the rechargeable battery (3), a state of charge of the rechargeable battery (3), an energy-saving setting and/or a power supply system disconnection setting of the electronic device (1) or an operating state of the electronic device (1) are/is checked in the step of parameter checking.

## Revendications

1. Agencement de dispositif comprenant un appareil électronique (1) comportant une batterie rechargeable (3) et un bloc d'alimentation (2) pouvant être électriquement relié à l'appareil électronique (1) comportant un circuit convertisseur (10) destiné à générer au moins une tension de fonctionnement (U_{B}) destinée à l'appareil électronique (1) à partir d'une tension d'alimentation d'un réseau d'alimentation en courant à une sortie de tension (14), dans lequel la tension de fonctionnement (U_{B}) est une tension continue, l'appareil électronique (1) et la sortie de tension (14) du bloc d'alimentation (2) peuvent être connectés l'un à l'autre par l'intermédiaire d'au moins une ligne d'alimentation en courant (9) destinée à transmettre la tension continue et l'appareil électronique (1) comprend des moyens de surveillance destinés à surveiller au moins un état de l'appareil électronique (1) et/ou de la batterie rechargeable (3), des premiers moyens de commande (4) destinés à générer au moins un signal de commande (S) en fonction de l'état surveillé et des premiers moyens de signalisation destinés à envoyer le signal généré (S) au bloc d'alimentation (2), **caractérisé en ce que** les premiers moyens de signalisation sont conçus pour moduler un signal de tension alternative à haute fréquence associé au signal de commande (S) sur la ligne d'alimentation en courant (9), et **en ce que** le bloc d'alimentation (2) comprend des moyens de séparation du réseau (20) destinés à séparer électriquement le circuit convertisseur (10) du réseau d'alimentation en courant, des seconds moyens de signalisation destinés à détecter un signal de commande (S) envoyé par le premier moyen de signalisation (4), qui sont couplés de manière capacitive à la sortie de tension (14) et sont conçus pour démoduler le signal de commande modulé (S) à partir du signal de tension alternative à haute fréquence, et des seconds moyens de commande (11) destinés à commander le moyen de séparation du réseau (20) en fonction du signal de commande (S) détecté.

2. Agencement d'appareil selon la revendication 1, **caractérisé en ce que** les seconds moyens de commande (11) sont conçus pour séparer du réseau d'alimentation en courant le circuit convertisseur (10) à l'aide des moyens de séparation du réseau (20) lors de la détection d'un signal de désactivation (S_{OFF}) des premiers moyens de commande (4).

3. Agencement d'appareil selon la revendication 1 ou 2, **caractérisé en ce que** les seconds moyens de commande (11) sont conçus pour connecter aux premiers moyens de commande (4) le circuit convertisseur (10) à l'aide des moyens de séparation du réseau (20) au réseau d'alimentation en courant lors de la détection d'un signal d'activation (S_{ON}).

4. Agencement d'appareil selon l'une quelconque des revendications 1 à 3, **caractérisé en ce que** les seconds moyens de signalisation sont en outre conçus pour transmettre des signaux de commande (S) aux premiers moyens de signalisation.

5. Agencement d'appareil selon la revendication 4, **caractérisé en ce que** les seconds moyens de commande (11) sont conçus pour transmettre aux premiers moyens de commande (4) des signaux de commande (S) destinés à obtenir par interrogation des propriétés d'appareil de l'appareil électronique (1).

6. Agencement d'appareil selon la revendication 4 ou 5, **caractérisé en ce que** les seconds moyens de commande (11) sont conçus pour transmettre aux premiers moyens de commande (4) des signaux de commande (S) concernant des valeurs de paramètres relatifs à des tensions de fonctionnement et/ou des courants de fonctionnement pouvant être générés par le bloc d'alimentation.

7. Agencement d'appareil selon l'une quelconque des revendications 1 à 6, **caractérisé en ce que** le moyen de séparation du réseau (20) comprend un élément de commutation (17) pouvant être actionné électriquement et **en ce que** les seconds moyens de commande (11) sont conçus pour alimenter l'élément de commutation (17) pouvant être actionné électriquement au moyen d'une tension de commutation électrique provenant de la batterie rechargeable (3).

8. Agencement d'appareil selon la revendication 7, **caractérisé en ce que** le moyen de séparation du réseau (20) comprend en outre un élément de commutation (18) pouvant être actionné manuellement, dans lequel l'élément de commutation (18) pouvant être actionné manuellement est conçu pour activer le bloc d'alimentation (2) indépendamment d'une tension (U_{BATT}) de la batterie rechargeable (3).

9. Procédé de commutation d'un bloc d'alimentation (2) comportant une sortie de tension (14) destinée à raccorder un appareil électronique (1), dans lequel l'appareil électronique (1) et le bloc d'alimentation (2) peuvent être connectés l'un à l'autre par l'intermédiaire d'au moins une ligne d'alimentation en courant (9) destinée à transmettre une tension continue provenant de la sortie de tension (14) pour la mise en fonctionnement de l'appareil électronique (1), comprenant :
- la surveillance d'un état de l'appareil électronique (1) et/ou de l'état d'une batterie rechargeable (3) de l'appareil électronique (1) ;
- la production d'au moins un signal de commande (S) en fonction de l'état surveillé par l'intermédiaire de l'appareil électronique (1) ;
- la signalisation de l'au moins un signal de commande généré (S) par l'appareil électronique (1) au bloc d'alimentation (2) par modulation d'un signal de tension alternative à haute fréquence associé au signal de commande (S) sur la ligne d'alimentation en courant (9) ;
- la détection du signal de commande signalisé (S) par l'intermédiaire du bloc d'alimentation (2) par démodulation du signal de commande modulé (S) à partir du signal de tension alternative à haute fréquence ; et
- la commande d'un moyen de séparation du réseau (20) du bloc d'alimentation (2) pour séparer ou connecter un circuit convertisseur (10) d'un, ou à un réseau d'alimentation en courant lorsqu'un signal de désactivation (S_{OFF}) ou un signal d'activation (S_{ON}) a été respectivement détecté par le bloc d'alimentation (2) lors de l'étape de détection.

10. Procédé selon la revendication 9, dans lequel, lors de l'étape de surveillance effectuée par un circuit de surveillance, au moins l'état de charge de la batterie rechargeable (3) est surveillé.

11. Procédé selon la revendication 9 ou 10, dans lequel, lors de l'étape de surveillance effectuée par un circuit de surveillance, au moins l'état de fonctionnement de l'appareil électronique (1) est surveillé.

12. Procédé selon l'une quelconque des revendications 9 à 11, comprenant les étapes supplémentaires suivantes :
- la transmission de données d'état de fonctionnement de l'appareil électronique (1) au bloc d'alimentation (2), et
- la commande du moyen de séparation du réseau (20) et/ou du circuit convertisseur (10) en fonction des données d'état de fonctionnement transmises.

13. Procédé selon la revendication 12, **caractérisé en ce que**, lors de l'étape de transmission de données d'état de fonctionnement, un courant de charge rapide, un courant de charge normale, un courant de charge d'entretien, un courant de fonctionnement, une tension de fonctionnement, un état de charge, un état de préparation, un état d'économie d'énergie et/ou un état de fonctionnement normal est transmis au bloc d'alimentation (2).

14. Procédé selon l'une quelconque des revendications 9 à 13, comprenant les étapes supplémentaires suivantes :
- l'interrogation du bloc d'alimentation (2) pour obtenir des paramètres de l'appareil électronique (1), et
- la commande du moyen de séparation du réseau (20) et/ou du circuit convertisseur (10) en fonction des paramètres obtenus par interrogation.

15. Procédé selon la revendication 14, **caractérisé en ce que**, lors de l'étape d'interrogation destinée à obtenir des paramètres, une interrogation est envoyée pour obtenir un instant et/ou une durée d'une dernière charge de la batterie rechargeable (3), un état de charge de la batterie rechargeable (3), un réglage d'économie d'énergie et/ou un réglage de séparation du réseau de l'appareil électronique (1) ou un état de fonctionnement de l'appareil électronique (1).
